(19) Europäisches Patentamt / European Patent Office / Office européen des brevets

(11) **EP 3 174 071 B1**

(12) **FASCICULE DE BREVET EUROPEEN**

(45) Date de publication et mention de la délivrance du brevet:
**14.11.2018 Bulletin 2018/46**

(51) Int Cl.:
*H01B 3/56* (2006.01)    *H02B 13/055* (2006.01)
*H01H 33/56* (2006.01)    *F17C 5/06* (2006.01)

(21) Numéro de dépôt: **15306895.2**

(22) Date de dépôt: **30.11.2015**

(54) **PROCÉDÉ ET INSTALLATION DE REMPLISSAGE D'UN APPAREILLAGE ÉLECTRIQUE À ISOLATION GAZEUSE COMPRENANT UN MÉLANGE DE (CF3)2CFCN ET DE CO2**

VERFAHREN UND ANLAGE ZUM BEFÜLLEN EINER GASISOLIERTEN ELEKTRISCHEN GERÄTEANORDNUNG, DIE EINE MISCHUNG AUS (CF3)2CFCN UND CO2 UMFASST

METHOD AND INSTALLATION FOR FILLING A GAS-INSULATED SWITCHGEAR COMPRISING A MIXTURE OF (CF3)2CFCN AND CO2

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**31.05.2017 Bulletin 2017/22**

(73) Titulaire: **General Electric Technology GmbH 5400 Baden (CH)**

(72) Inventeurs:
• **KIEFFEL, Yannick**
  **38440 St-Jean-de Bournay (FR)**

• **BIQUEZ, François**
  **73100 Pugny-Chatenod (FR)**
• **PORTE, Jacques**
  **69006 LYON (FR)**

(74) Mandataire: **Fischer, Jens Peter et al General Electric Technology GmbH Global Patent Operation - Europe Brown Boveri Strasse 7 5400 Baden (CH)**

(56) Documents cités:
**WO-A1-2013/045397    WO-A1-2014/037031 WO-A1-2015/040069**

**Description**

**DOMAINE TECHNIQUE**

L'invention appartient au domaine de l'isolation électrique et de l'extinction des arcs électriques dans des appareils électriques haute ou moyenne tension.

Plus particulièrement, la présente invention propose un procédé et une installation pour le remplissage d'un appareillage électrique haute ou moyenne tension à isolation gazeuse pour lequel le gaz d'isolation comprend un mélange d'heptafluoroisobutyronitrile ($(CF_3)_2$CFCN) et de dioxyde de carbone.

**ÉTAT DE LA TECHNIQUE ANTÉRIEURE**

Dans un appareillage électrique pour une ligne de transport du courant à haute ou moyenne tension, les fonctions d'isolation électrique et d'extinction d'arc électrique sont typiquement assurées par un gaz qui est confiné à l'intérieur de cet appareillage.

Actuellement, le gaz le plus souvent utilisé dans ce type d'appareil est l'hexafluorure de soufre ($SF_6$). Ce gaz présente, en effet, une rigidité diélectrique relativement haute, une bonne conductivité thermique et des pertes diélectriques peu élevées. Il est chimiquement inerte et non toxique pour l'homme et les animaux et, après avoir été dissocié par un arc électrique, il se recombine rapidement et presque totalement. De plus, il est ininflammable et son prix est, encore aujourd'hui, modéré.

Toutefois, le $SF_6$ a pour inconvénient majeur de présenter un potentiel de réchauffement global (PRG ou GWP pour « Global Warming Potential ») de 23 500 (relativement au $CO_2$ sur 100 ans) et une durée de séjour dans l'atmosphère de 3 200 ans, ce qui le place parmi les gaz à fort pouvoir d'effet de serre. Le $SF_6$ a donc été inscrit par le Protocole de Kyoto (1997) sur la liste des gaz dont les émissions doivent être limitées.

Le meilleur moyen de limiter les émissions du $SF_6$ consiste à limiter l'utilisation de ce gaz, ce qui a conduit les industriels à chercher des alternatives au $SF_6$.

A cet effet, un nouveau gaz présentant les propriétés d'isolation électrique suffisante pour une application dans le domaine de l'appareillage électrique haute ou moyenne tension a été développé. Plus précisément, ce gaz est un mélange de deux molécules, l'une présente en grande majorité et la deuxième est l'heptafluoroisobutyronitrile, présent en plus faible quantité. Ce mélange gazeux a l'avantage d'être basé sur un produit de substitution au $SF_6$ présentant un GWP plus faible que le $SF_6$ mis en solution dans un gaz hôte ou de dilution à GWP très faible, comme du dioxyde de carbone ($CO_2$) dont le GWP est égal à 1, ou à GWP nul tel que l'azote ($N_2$) ou l'air.

La demande internationale WO 2014/037566 décrit l'utilisation de tels mélanges comme gaz d'isolation dans un appareil électrique haute ou moyenne tension, associés à une isolation solide. Un gaz d'isolation particulier à savoir comprenant de l'heptafluoroisobutyronitrile, du dioxyde de carbone et de l'oxygène, l'oxygène étant présent dans ledit milieu gazeux en un pourcentage molaire compris entre 1 et 25%, a, quant à lui, été décrit dans la demande internationale WO 2015/040069.

En ce qui concerne le remplissage d'appareils électriques haute ou moyenne tension, il n'existe pas, pour l'instant, de moyens simples permettant de les remplir avec un mélange gazeux comprenant au moins deux composants distincts tels qu'un mélange d'heptafluoroisobutyronitrile et de dioxyde de carbone, toutes les méthodes actuelles de remplissage présentant un ou plusieurs inconvénient(s).

Une première méthode de remplissage est réalisée à partir de deux containers séparés en additionnant les pressions partielles de chaque composant. L'inconvénient de cette méthode est qu'il faut manipuler deux containers séparés, que le mélange réalisé n'est pas immédiatement homogène et demande donc du temps pour s'homogénéiser. Ce mode de réalisation est complexe et peut amener des erreurs de réalisations sur site si le respect des pressions partielles de chaque composant n'est pas respecté.

Une autre méthode de remplissage utilise un mélangeur de gaz mais ce mode de réalisation est complexe et repose sur l'utilisation de mélangeurs de gaz onéreux.

Enfin, une dernière méthode de remplissage met en oeuvre un mélange liquéfié et soit la phase gaz, soit la phase liquide est prélevée. Ce mode de réalisation souffre de la non stabilité du ratio entre les deux composants en fonction du taux de remplissage de la bouteille. En effet, les deux composants tels que l'heptafluoroisobutyronitrile et le $CO_2$ n'ont pas les mêmes points d'ébullition. La pression de vapeur du $CO_2$ étant plus forte que celle de l'heptafluoroisobutyronitrile, le $CO_2$ a donc tendance à sortir en premier enrichissant le mélange restant en heptafluoroisobutyronitrile. Le document WO 2014/037031 concerne un procédé et un dispositif pour remplir le réservoir d'un appareillage de commutation à isolation gazeuse avec un mélange d'au moins deux gaz dans un rapport vérifié à l'aide d'un capteur. Le dispositif utilisé pour mettre en oeuvre ce procédé comprend deux réservoirs comprenant chacun un des composés du mélange utilisé. Le document WO 2015/040069 se rapporte à un mélange particulier de gaz assurant l'isolation électrique et/ou l'extinction des arcs électriques dans un appareil électrique moyenne ou haute tension. Le mélange gazeux comprend de l'heptafluoroisobutyronitrile de formule (CF3)2CFCN, du dioxyde de carbone et une faible quantité d'oxygène. Le remplissage de l'enceinte de l'appareil électrique se fait soit par addition successive des gaz, soit en utilisant un mélangeur.

Les inventeurs se sont donc fixé pour but de trouver un procédé et une installation pour remplir un appareillage électrique pour une ligne de transport du courant à haute ou moyenne tension avec un mélange gazeux comprenant du $CO_2$ et de l'heptafluoroisobutyronitrile, permettant de garantir précision et stabilité dans le ratio de $CO_2$ et d'hepta-fluoroisobutyronitrile au cours du remplissage.

## EXPOSÉ DE L'INVENTION

L'invention propose un procédé et une installation permettant de pallier tout ou partie des inconvénients et difficultés rencontrés dans les procédés et installations de l'art antérieur.

En effet, la présente invention propose un procédé et une installation permettant de remplir un appareillage électrique haute ou moyenne tension avec un gaz d'isolation électrique et/ou d'extinction des arcs électriques comprenant de l'heptafluoroisobutyronitrile et du dioxyde de carbone, ledit procédé et ladite utilisation permettant de transférer, de manière précise, ce mélange gazeux avec un contrôle et une stabilité du ratio des composants du mélange en cours de remplissage. Cette stabilité est assurée quel que soit le niveau de liquide ou de gaz dans le récipient d'origine du mélange comprenant de l'heptafluoroisobutyronitrile et du dioxyde de carbone et quelle que soit la température extérieure lors du remplissage.

Dans l'appareillage électrique à remplir dans le cadre de la présente invention, le milieu isolant est utilisé exclusivement sous forme gazeuse. Par contre, pour le stockage et le transport, il est préférable, pour des raisons de place, de liquéfier le milieu. La liquéfaction des gaz se fait par compression, refroidissement ou de manière industrielle en couplant compression et refroidissement. Ensuite on repasse à l'état gazeux par vaporisation et détente du gaz. Dans le cas d'un gaz formé d'un seul composant, ce processus est relativement simple.

Toutefois, dans le cas de la présente invention, le milieu est composé d'au moins deux composants distincts. Il convient donc de s'assurer que la vaporisation se produit de manière homogène. Les travaux des inventeurs ont permis de montrer que l'utilisation du mélange gazeux à l'état supercritique permet de résoudre un tel problème technique. En effet, à l'état supercritique, le mélange occupe l'ensemble du volume physique et se comporte comme un seul gaz ayant la densité du liquide. Le passage à l'état supercritique se fait par échauffement du liquide sous pression jusqu'à passer le point critique défini par ses température et pression critiques. Ses température et pression critiques étant dépendantes de la fraction molaire, du volume critique molaire et de la température critique de chaque composé entrant dans la composition du mélange.

La température critique des mélanges gazeux simples peut être estimée à partir de la formule établie par C.C. Li en 1971 :

$$T_{cr\_mel} = \sum \emptyset_{cri} * T_{cri} \quad (1)$$

avec :

$$\emptyset_{cri} = \frac{V_{cri}X_i}{\sum V_{cri}X_i} \quad (2)$$

dans lesquelles
$X_i$ est la faction molaire du composé i dans le mélange, $V_{cri}$ est le volume critique molaire du composé i,
$T_{cri}$ est la température critique du composé i.

La température et volume critique molaire pour le CO2 sont disponibles dans la littérature. La température critique du CO2 est de 31°C et son volume critique molaire est de 94 cm$^3$.

Dans le cas de l'heptafluoroisobutyronitrile, la température critique est de 109°C et son volume critique a été estimé à partir de la relation de K.G. JOBACK et R.C. REID (Chem. Eng. Comm., 1987, vol. 57, pages 233-243) selon l'expression suivante :

$$V_{cri} = 17.5 + \sum V_{cri}(groupement\ chimique) \quad (3)$$

L'heptafluoroisobutyronitrile, ou iso-$C_3F_7CN$, peut être décomposé en groupement >C<, -F et C=N, ayant respectivement des volumes critiques molaires de 27 cm$^3$, 27 cm$^3$ et 91 cm$^3$.

Le volume critique molaire de l'heptafluoroisobutyronitrile est donc :

$$V_{cri}(\text{iso} - C_3F_7CN) = 17.5 + 3 * 27 + 7 * 27 + 91 = 378{,}5\ cm^3$$

Ainsi, la présente invention concerne un procédé de remplissage d'une enveloppe (1) fermée d'un appareillage électrique pour une ligne de transport de courant à haute ou moyenne tension, dans laquelle se trouve au moins un composant électrique, avec un mélange gazeux comprenant de l'heptafluoroisobutyronitrile et du dioxyde de carbone dans des proportions prédéfinies, ledit procédé comprenant les étapes consistant à :

a) préparer, dans un récipient (2), un mélange liquide pressurisé comprenant de l'heptafluoroisobutyronitrile et du dioxyde de carbone dans des proportions prédéfinies ;

b) chauffer, dans le récipient (2), le mélange liquide pressurisé préparé à ladite étape (a) jusqu'à une température supérieure ou égale à la température critique du mélange moyennant quoi un mélange gazeux comprenant de l'heptafluoroisobutyronitrile et du dioxyde de carbone dans des proportions prédéfinies est obtenu ;

c) transférer ledit mélange gazeux obtenu à l'étape (b) du récipient (2) vers l'enveloppe (1) via un circuit de transfert (3) dans lequel le mélange gazeux est détendu et maintenu à une température supérieure à la température de liquéfaction de l'heptafluoroisobutyronitrile à sa pression partielle dans le circuit de transfert (3) avant son entrée dans l'enveloppe (1) à remplir.

Selon un tel procédé, l'appareillage électrique, une fois rempli, contient de l'heptafluoroisobutyronitrile et du $CO_2$ uniquement sous forme gazeuse, de sorte qu'il n'y a pas d'utilisation d'heptafluoroisobutyronitrile en excès.

Dans un premier mode de réalisation, le chauffage du mélange comprenant de l'heptafluoroisobutyronitrile et du dioxyde de carbone sous forme liquide pressurisé afin de former un mélange gazeux comprenant ces deux composés, lors de l'étape (b), est réalisé par un organe de chauffe (4) externe au récipient (2).

Dans un deuxième mode de réalisation, ce chauffage est réalisé par un organe de chauffe (5) interne au récipient (2).

Dans un troisième mode de réalisation, ce chauffage est réalisé par à la fois un organe de chauffe (4) externe au récipient (2) et un organe de chauffe (5) interne au récipient (2).

Plusieurs étapes de contrôle sont envisageables dans le cadre du procédé selon la présente invention et ce, pour garantir un remplissage de l'appareillage électrique avec un mélange gazeux comprenant de l'heptafluoroisobutyronitrile et du dioxyde de carbone dans des proportions prédéfinies.

A cet effet, durant l'étape de transfert (c), le ratio molaire entre l'heptafluoroisobutyronitrile et le dioxyde de carbone dans le mélange gazeux est mesuré.

De même, durant l'étape de transfert (c), la température du mélange gazeux dans le récipient (2) est mesurée.

Enfin, la température au niveau des organes de chauffe (4,5) est mesurée.

Au vu d'au moins l'une de ces trois mesures, la puissance de chauffage lors de l'étape de chauffage (a) peut être ajustée et/ou régulée sur la base de la mesure du ratio molaire entre l'heptafluoroisobutyronitrile et le dioxyde de carbone lors de l'étape de transfert (c), sur la base de la mesure de la température du mélange gazeux dans le récipient (2) lors de l'étape de transfert (c) et préalablement à sa détente et/ou sur la base de la mesure des organes de chauffe (4,5).

La présente invention met en oeuvre un mélange liquide ou gazeux comprenant de l'heptafluoroisobutyronitrile et du dioxyde de carbone dans des proportions prédéfinies.

Le mélange liquide ou gazeux peut ne contenir que de l'heptafluoroisobutyronitrile et du dioxyde de carbone et être donc constitué par ces deux composés.

En variante, ce mélange liquide ou gazeux peut contenir au moins un autre élément en plus de l'heptafluoroisobutyronitrile et du dioxyde de carbone. Typiquement, il comprend en outre de l'oxygène.

La présente invention concerne également une installation pour le remplissage d'une enveloppe (1) fermée d'un appareillage électrique pour une ligne de transport de courant à haute ou moyenne tension, dans laquelle se trouve au moins un composant électrique, avec un mélange gazeux comprenant de l'heptafluoroisobutyronitrile et du dioxyde de carbone dans des proportions prédéfinies.

Cette installation comprend :

- un récipient (2) apte à contenir un mélange comprenant de l'heptafluoroisobutyronitrile et du dioxyde de carbone dans des proportions prédéfinies ;
- un organe de chauffe (4,5) pour chauffer, dans le récipient (2), le mélange comprenant de l'heptafluoroisobutyronitrile et du dioxyde de carbone dans des proportions prédéfinies se présentant sous forme d'un liquide pressurisé jusqu'à une température supérieure ou égale à la température critique du mélange moyennant quoi un mélange gazeux comprenant de l'heptafluoroisobutyronitrile et du dioxyde de carbone dans des proportions prédéfinies est obtenu ;

- un circuit de transfert (3) pour transférer le mélange gazeux comprenant de l'heptafluoroisobutyronitrile et du dioxyde de carbone dans des proportions prédéfinies du récipient (2) vers l'enveloppe (1), ledit circuit de transfert reliant fluidiquement ledit récipient et ladite enveloppe ledit circuit de transfert présentant un organe de détente (6) pour abaisser la pression du mélange gazeux à une valeur déterminée en vue du remplissage de l'enveloppe (1) et des moyens (7) aptes à maintenir le mélange gazeux à une température supérieure à la température de liquéfaction de l'heptafluoroisobutyronitrile à sa pression partielle dans le circuit de transfert ladite installation de remplissage comprenant une ou plusieurs sécurité(s) de température.

Dans l'installation de remplissage selon la présente invention, le circuit de transfert (3) présente typiquement des moyens (8) pour mesurer le ratio molaire entre l'heptafluoroisobutyronitrile et le dioxyde de carbone dans le mélange gazeux.

De plus, dans l'installation de remplissage selon la présente invention, le circuit de transfert (3) présente un capteur de température (9) pour mesurer la température du mélange gazeux dans le récipient (2).

D'autres caractéristiques et avantages de la présente invention apparaîtront encore à l'homme du métier à la lecture des exemples ci-dessous donnés à titre illustratif et non limitatif, en référence aux figures annexées.

## BRÈVE DESCRIPTION DES DESSINS

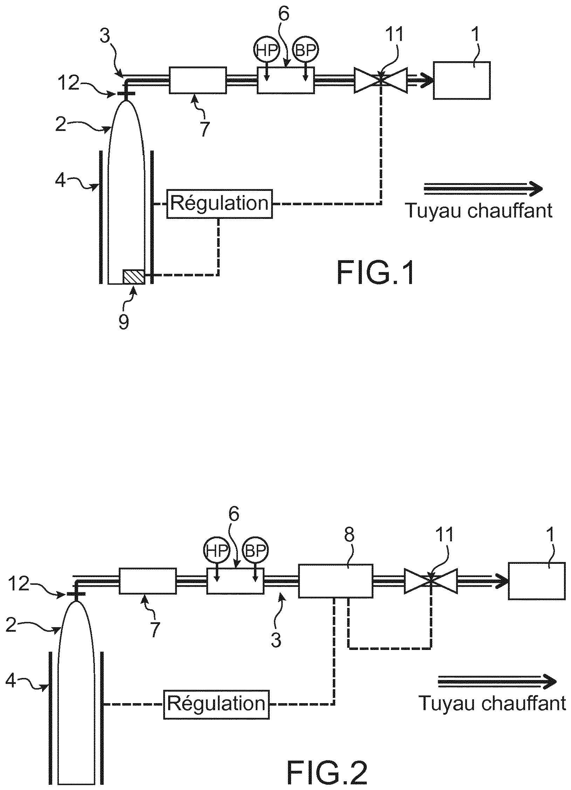

La Figure 1 est une représentation schématique et partielle illustrant la structure et le fonctionnement d'un premier exemple d'installation de remplissage selon l'invention dans laquelle le système de chauffage est extérieur au récipient et la régulation de la puissance de chauffage est conditionnée par la mesure de la température du mélange gazeux dans le récipient (2).

La Figure 2 est une représentation schématique et partielle illustrant la structure et le fonctionnement d'un deuxième exemple d'installation de remplissage selon l'invention dans laquelle le système de chauffage est extérieur au récipient et la régulation de la puissance de chauffage est conditionnée par la mesure directe du ratio molaire entre l'heptafluoroisobutyronitrile et le dioxyde de carbone dans le mélange gazeux.

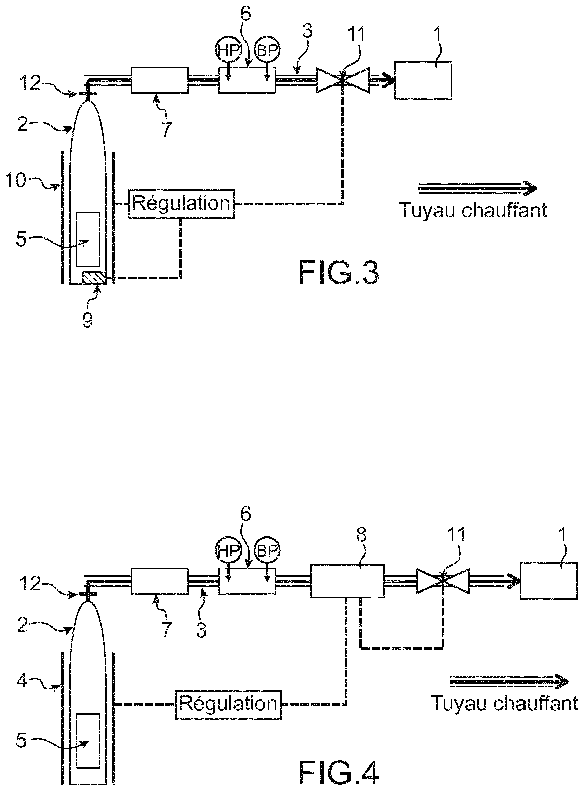

La Figure 3 est une représentation schématique et partielle illustrant la structure et le fonctionnement d'un troisième exemple d'installation de remplissage selon l'invention dans laquelle le système de chauffage est interne au récipient et la régulation de la puissance de chauffage est conditionnée par la mesure de la température du mélange gazeux dans le récipient (2).

La Figure 4 est une représentation schématique et partielle illustrant la structure et le fonctionnement d'un quatrième exemple d'installation de remplissage selon l'invention dans laquelle le système de chauffage est interne au récipient et la régulation de la puissance de chauffage est conditionnée par la mesure directe du ratio molaire entre l'heptafluoroisobutyronitrile et le dioxyde de carbone dans le mélange gazeux.

## EXPOSÉ DÉTAILLÉ DE MODES DE RÉALISATION PARTICULIERS

Dans ce qui précède et ce qui suit, l'expression « haute tension » est utilisée dans son acceptation habituelle, à savoir que l'expression « haute tension » désigne une tension qui est strictement supérieure à 52 000 volts en courant alternatif et à 75 000 volts en courant continu.

Dans ce qui précède et ce qui suit, l'expression « moyenne tension » est utilisée dans son acceptation habituelle, à savoir que le terme « moyenne tension » désigne une tension qui est supérieure à 1 000 volts en courant alternatif et à 1 500 volts en courant continu mais qui ne dépasse pas 52 000 volts en courant alternatif et 75 000 volts en courant continu.

Un appareillage électrique comporte principalement une enveloppe extérieure ou enceinte (1), longitudinale délimitant un volume creux et un ou plusieurs composant(s) électrique(s) qui est/sont agencés à l'intérieur de l'enveloppe.

Le volume intérieur de l'enveloppe est fermé de manière étanche aux gaz et est rempli par un gaz d'isolation électrique et d'extinction d'arc électrique qui comprend un mélange d'heptafluoroisobutyronitrile et de dioxyde de carbone.

Ainsi, l'isolation gazeuse met en oeuvre un mélange gazeux comprenant de l'heptafluoroisobutyronitrile et du dioxyde de carbone.

L'heptafluoroisobutyronitrile de formule (I) : $(CF_3)_2CFCN$ (I), également désigné iso-$C_3F_7CN$ ou i-$C_3F_7CN$, correspond au 2,3,3,3-tétrafluoro-2-trifluorométhyl propanenitrile, de numéro CAS : 42532-60-5, présentant un point d'ébullition de -4,7°C à 1013 hPa (point d'ébullition mesuré selon ASTM D1120-94 "Standard Test Method for Boiling Point of Engine Coolants").

La tenue diélectrique relative de l'heptafluoroisobutyronitrile de formule (I), normalisée par rapport au $SF_6$ est de 2.2, ladite tenue diélectrique étant mesurée à pression atmosphérique, sous tension continue, entre deux électrodes en acier de diamètre 2,54 cm et espacées de 0,1 cm.

Ainsi, l'heptafluoroisobutyronitrile de formule (I) tel que précédemment défini, qui n'est ni toxique, ni corrosif, ni inflammable et qui présente un PRG faible par rapport à celui du SF$_6$, est doté de propriétés d'isolation électrique et d'extinction des arcs électriques propres à lui permettre de remplacer en mélange avec un gaz de dilution, le SF$_6$ comme gaz d'isolation et/ou d'extinction d'arc dans des appareils électriques haute tension.

Le mélange liquide ou gazeux mis en oeuvre dans le cadre de la présente invention comprend de l'heptafluoroisobutyronitrile et du dioxyde de carbone dans des proportions prédéfinies.

Dans le mélange gazeux utilisé pour remplir l'enveloppe, le dioxyde de carbone est un gaz de dilution également connu sous l'appellation « gaz de mélange » ou « gaz porteur ».

En effet, dans les conditions d'utilisation de l'appareillage électrique, la pression à l'intérieur de l'enveloppe est de l'ordre de 6 à 10 bars pour un appareillage haute tension et de l'ordre de 0,3 à 1,5 bar pour un appareillage moyenne tension. Sous de telles pressions ou à basses températures, l'heptafluoroisobutyronitrile se liquéfie limitant l'efficacité de l'isolation électrique. C'est pourquoi un gaz de dilution comme le dioxyde de carbone est utilisé en mélange avec l'heptafluoroisobutyronitrile gazeux, afin d'en abaisser la pression partielle en dessous de la pression de vapeur saturante à la température minimale de service de l'appareillage électrique.

Le mélange liquide ou gazeux mis en oeuvre dans le cadre de la présente invention peut ne contenir que de l'heptafluoroisobutyronitrile et du dioxyde de carbone et donc n'être constitué que de ces deux composés. Dans ce cas, le mélange liquide ou gazeux comprend de 2 à 15% molaire d'heptafluoroisobutyronitrile et de 85 à 98% molaire de dioxyde de carbone et, en particulier, de 4 à 10% molaire d'heptafluoroisobutyronitrile et de 90 à 96% molaire de dioxyde de carbone.

En variante, ce mélange liquide ou gazeux peut contenir au moins un autre élément en plus de l'heptafluoroisobutyronitrile et du dioxyde de carbone. Cet autre élément peut être tout composé habituellement utilisé dans l'isolation électrique des appareillages électriques haute ou moyenne tension. Avantageusement, un tel composé présente un PRG égal à 1 ou voire nul. Plus particulièrement, l'élément utilisable dans le cadre de la présente invention en mélange avec l'heptafluoroisobutyronitrile et le dioxyde de carbone est choisi parmi l'azote, l'oxygène, l'air, avantageusement sec, et un de leurs mélanges. Typiquement, cet autre élément est de l'oxygène.

Dans cette variante, le mélange liquide ou gazeux comprend de 2 à 15% molaire d'heptafluoroisobutyronitrile, de 70 à 97% molaire de dioxyde de carbone et de 1 à 15% molaire d'au moins un autre élément tel que précédemment défini et notamment de 1 à 15% molaire d'oxygène. En particulier, le mélange liquide ou gazeux comprend de 4 à 10% molaire d'heptafluoroisobutyronitrile, de 80 à 94% molaire de dioxyde de carbone et de 2 à 10% molaire d'au moins un autre élément tel que précédemment défini et notamment de 2 à 10% molaire d'oxygène.

La première étape du procédé selon la présente invention consiste à préparer, dans un récipient (2), un mélange liquide pressurisé comprenant de l'heptafluoroisobutyronitrile et du dioxyde de carbone dans des proportions prédéfinies.

Le récipient (2) mis en oeuvre dans le cadre de la présente invention est un récipient adapté pour le remplissage et le transport du CO$_2$ à l'état liquide, gazeux voire supercritique. Ce récipient peut se présenter sous forme d'une bouteille, d'une bonbonne ou d'un container, ceux-ci étant typiquement aptes à contenir de 1 à 1000 L de liquide, les bouteilles de 50 L de type B50 étant les plus communément utilisées. Ce type de récipient est bien connu par l'homme du métier et disponible auprès de tous les fabricants et revendeurs de CO$_2$ liquéfié.

Le calcul des densités pour les mélanges liquides versus les mélanges gazeux permet d'approcher les avantages de l'étape (a) mettant en oeuvre un mélange de composés sous forme liquide.

La densité du CO$_2$ pur à l'état gazeux est, à pression atmosphérique, de 1,87 kg/m$^3$ et de 1256 kg/m$^3$ une fois liquéfié. Il y a donc un rapport de compression de l'ordre de 500. Dans le cadre des mélanges gazeux mis en oeuvre dans le cadre de la présente invention comprenant avantageusement du CO$_2$ et entre 4 et 10% molaire d'i-C$_3$F$_7$CN, ce ratio de compression entre liquide et gaz reste similaire (Tableau 1 ci-après).

Tableau 1

|  | %mol | %masse | Densité gaz [kg/m3] | Densité liquide [kg/m3] |
|---|---|---|---|---|
| **Heptafluoroisobutyr onitrile** | 100 | 100 | 8,11 | 1350 |
| **CO2** | 100 | 100 | 1,87 | 1256 |
| **Mélange à 4% molaire** | 0,04 | 0,15 | 2,1 | 1259,8 |
| **Mélange à 6% molaire** | 0,06 | 0,22 | 2,2 | 1261,6 |
| **Mélange à 10% molaire** | 0,10 | 0,33 | 2,5 | 1265,4 |

Dans le cadre des mélanges comprenant du CO$_2$ et 4% molaire d'i-C$_3$F$_7$CN qui permettent d'atteindre des températures minimales en service de l'appareil électrique haute ou moyenne tension de l'ordre de -30°C, ou voire inférieures à -30°C, sans liquéfaction de la partie i-C$_3$F$_7$CN, la densité du gaz est 2,1 kg/m$^3$ et 1260 kg/m$^3$ pour la phase

liquide.

En considérant, comme récipient (2), une bouteille classique de type B50 de contenance 50 L avec une pression d'épreuve de 190 bars, le taux de remplissage pour ce type de gaz en respectant la règlementation ADR pour le transport sur route est 0,5 kg/1. Cette bouteille contient donc au maximum 25 kg de mélange à 4% molaire d'i-$C_3F_7CN$, ce qui représente en phase détendue environ 12 m$^3$ à pression atmosphérique (25/2,1) .

Pour comparer à un stockage et transport en phase gaz, il faut rester à des pressions ne permettant pas la liquéfaction de la phase i-$C_3F_7CN$ à -30°C, ce qui représente une pression partielle maximale de 0,37 bar absolu. Dans ce cas, la pression du mélange dans le récipient ne doit pas dépasser 9,3 bars absolus (0,37/0,04) ce qui fait une densité de 19,6 kg/m$^3$, alors que la bouteille B50 a une densité de 500 kg/m$^3$ ce qui permet de concentrer le milieu gazeux d'un facteur 25 (500/19,6) .

La préparation d'un mélange sous forme d'un liquide pressurisé comprenant une quantité prédéterminée de $CO_2$ et d'i-$C_3F_7CN$ est une étape classique pour l'homme du métier incluant une mesure précise des masses de $CO_2$ et d'i-$C_3F_7CN$ pouvant mettre en oeuvre des débitmètres ainsi qu'une compression et/ou un refroidissement.

Dans le cadre de l'étape (b) du procédé selon la présente invention, le transfert de la phase liquide pressurisée contenue dans le récipient (2) se fait par passage du mélange à l'état supercritique. Ceci se produit, pour le $CO_2$ pur, à une température critique de 31°C et une pression critique de 73,8 bars. Pour des mélanges à base d'i-$C_3F_7CN$ et de $CO_2$, les températures critiques des mélanges ont été calculées selon les équations (1) et (2) combinées entre elles.

Par exemple pour un mélange à 4% molaire d'i-$C_3F_7CN$ dans du $CO_2$, la température critique dudit mélange est la suivante :

$$T_{cri_{mel}} = \frac{0.04 * 378.5 * (273,15 + 109)}{0.04 * 378.5 + 0.96 * 94} + \frac{0.96 * 94 * (273,15 + 31)}{0.04 * 378.5 + 0.96 * 94} = 315K$$

La température critique du mélange à 4%molaire d'i-$C_3F_7CN$ dans $CO_2$ est de 315 K, soit 42°C. Un calcul similaire a été réalisé pour les différents mélanges et les valeurs obtenues sont reportées dans le Tableau 2 ci-après :

Tableau 2

| i-$C_3F_7CN$ fraction molaire | $T_c$ (°C) | $P_c$ (bar) |
|---|---|---|
| 0 | 31,0 | 73,77 |
| 0,04 | 42 | 74 |
| 0,06 | 47 | 73 |
| 0,08 | 51 | 72 |
| 0,10 | 55 | 71 |

L'étape (b) du procédé selon l'invention consiste donc à chauffer le mélange liquide pressurisé contenu dans le récipient (2) jusqu'à une température supérieure ou égale à la température adaptée pour amener le mélange contenu à l'état supercritique. Dans un tel état, le $CO_2$ et l'heptafluoroisobutyronitrile se mélangent parfaitement, passent à l'état de gaz ayant la densité du liquide et occupent le volume complet du récipient de manière homogène pour ne faire plus qu'un gaz.

Pour atteindre ce but, un organe de chauffe (4) externe au récipient (2) et/ou un organe de chauffe (5) interne au récipient (2) est/sont utilisé(s).

Dans un premier mode de réalisation, le chauffage est réalisé par un organe (4) externe au récipient (2) i.e. monté sur les parois du récipient (2) ou positionné à proximité de ces dernières. Un tel organe peut se présenter sous forme d'une ceinture de chauffe ou d'un cordon chauffant de type résistif, inductif ou par passage d'un fluide porté à une température adaptée pour porter le mélange contenu dans le récipient (2) à la température voulue. En variante, cet organe de chauffe externe (4) peut se présenter sous forme d'un caisson thermalisé disposé autour du récipient (2).

Dans un deuxième mode de réalisation, ce chauffage est réalisé par un organe de chauffe (5) interne au récipient (2). Un tel organe se présente typiquement sous forme d'une résistance chauffante positionnée dans le volume interne délimité par le récipient (2). Lorsque le chauffage est réalisé via un organe de chauffe interne (5), le récipient peut en outre présenter, monté sur ses parois ou positionné à proximité de ces dernières, un système d'isolation thermique (10) du type caisson isolant.

Dans un troisième mode de réalisation, ce chauffage est réalisé par à la fois un organe de chauffe (4) externe au récipient (2) et un organe de chauffe (5) interne au récipient (2).

La puissance de chauffe du récipient (2) est calculée en fonction de l'enthalpie de vaporisation du mélange gazeux, du débit massique demandé et des pertes thermiques de l'ensemble du système. Dans le cas d'un mélange comprenant du $CO_2$ et 4% molaire d'i-$C_3F_7CN$, l'enthalpie de vaporisation sera d'environ 15,7 kJ/mol. Pour un débit de transfert de l'ordre de 50 kg/h, une puissance de chauffe d'environ 5 kW est donc nécessaire.

La puissance de chauffe du récipient (2) peut, dans un premier mode de réalisation, être ajustée et/ou régulée sur la base de la mesure du ratio molaire entre l'i-$C_3F_7CN$ et le $CO_2$ présent dans le mélange gazeux au cours du transfert de ce dernier entre le récipient (2) et l'enveloppe (1). A cet effet, le circuit de transfert (3) peut présenter des moyens (8) pour mesurer le ratio molaire entre l'i-$C_3F_7CN$ et le $CO_2$ dans le mélange gazeux, typiquement, en aval de l'organe de détente (6) et en amont de l'enveloppe (1) à remplir. Tout moyen adapté pour mesurer un ratio molaire dans un mélange gazeux à plusieurs composants est utilisable dans le cadre de la présente invention. A titre d'exemples illustratifs et non limitatifs, on peut citer un chromatographe gazeux en ligne, un analyseur de gaz, un spectromètre infra-rouge, un analyseur basé sur la mesure de la vitesse du son dans le gaz, un densitomètre, un spectromètre de masse ou l'une quelconque de leur combinaison. Si le ratio molaire mesuré est différent de la valeur du ratio molaire prédéterminée, un robinet ou une vanne (11) telle qu'une électrovanne placée en amont de l'enveloppe à remplir (2) est fermée, manuellement ou automatiquement, de façon à empêcher le remplissage de l'enveloppe et la puissance de chauffe du récipient (1) est régulée de façon à ce que le ratio molaire mesuré atteigne la valeur du ratio molaire prédéterminée.

Dans un second mode de réalisation, la puissance de chauffe du récipient (2) peut être ajustée et/ou régulée sur la base de la mesure de la température du mélange gazeux dans le récipient (2) durant l'étape de transfert (c) et préalablement à sa détente. En effet, pour maintenir les avantages liés à l'utilisation du mélange supercritique, il est nécessaire que la température du mélange gazeux reste, durant l'étape de transfert (c) et préalablement à sa détente, à une valeur supérieure ou égale à la température critique du mélange. Tout moyen connu de l'homme du métier pour mesurer la température d'un gaz du type capteur de température est utilisable pour ce contrôle. Un tel capteur de température doit se trouver au plus près du mélange à l'état supercritique. Typiquement ce capteur de température (9) se situe en bas du récipient (2). Si la température mesurée est inférieure à la température critique du mélange, un robinet ou une vanne (11) telle qu'une électrovanne placée en amont de l'enveloppe à remplir (2) est fermée, manuellement ou automatiquement, de façon à empêcher le remplissage de l'enveloppe et la puissance de chauffe du récipient (1) est régulée de façon à ce que la température mesurée atteigne une valeur supérieure ou égale à la température critique du mélange.

Enfin, la puissance de chauffe du récipient (2) peut être ajustée et/ou régulée sur la base de la mesure de la température au niveau de l'organe de chauffe (4,5). Ainsi, les organes de chauffe (4,5) dans le cadre du procédé et de l'installation selon l'invention peuvent présenter des sondes de température aptes ou destinées à stopper la chauffe en cas de dépassement d'une valeur limite définie par l'opérateur.

De plus, l'installation selon l'invention présente avantageusement au niveau du récipient (2) un disque de rupture destiné à éviter une surpression au niveau de ce dernier en cas de défaillance du système de régulation de la chauffe. Un tel disque de rupture est typiquement taré à 120 bars.

A noter enfin que l'installation selon la présente invention contient une ou plusieurs sécurité(s) en température afin que le mélange gazeux n'atteigne jamais une température déterminée par l'opérateur qui est typiquement de 65°C.

Durant l'étape (c) du procédé selon l'invention, le mélange gazeux obtenu lors de l'étape (b) est amené du récipient (2) vers l'enveloppe (1) via un circuit de transfert (3). Durant ce transfert, le mélange gazeux doit être détendu jusqu'à présenter une valeur de pression adaptée au remplissage de l'enveloppe (1). Cette détente met en oeuvre un organe de détente (6) configuré pour abaisser la pression du mélange gazeux d'une valeur supérieure ou égale à la pression critique du mélange jusqu'à une valeur déterminée comprise entre 1 et 15 bars. Tout organe de détente (6) connu de l'homme du métier est utilisable dans le cadre de la présente invention. Un tel organe du type détendeur présente une chambre ou zone de haute pression (HP) disposée en aval du récipient (2) et une chambre ou zone de basse pression (BP) disposée en amont de l'enveloppe (1).

En même temps, la température du mélange gazeux doit être maintenue à une température supérieure à la température de liquéfaction de l'i-$C_3F_7CN$ à sa pression partielle dans le circuit de transfert (3) et ce, pour éviter le dépôt d'i-$C_3F_7CN$ liquide dans le circuit de transfert (3) qui entraînerait de fait une modification du ratio molaire entre l'i-$C_3F_7CN$ et le $CO_2$ dans le mélange gazeux restant. Or, lorsque la vanne ou le robinet (12) isolant le récipient (2) du circuit de transfert (3) est ouvert(e), le mélange gazeux initialement contenu dans le récipient passe dans le circuit de transfert (3) où il est susceptible de se refroidir par détente Joule Thomson. Pour compenser ce refroidissement et maintenir le mélange gazeux à une température supérieure à la température de liquéfaction de l'i-$C_3F_7CN$, le circuit de transfert (3) présente un système (7) apte à maintenir le mélange gazeux à une température supérieure à la température de liquéfaction de l'heptafluoroisobutyronitrile du type réchauffeur de gaz et notamment du type réchauffeur de $CO_2$. L'action thermorégulatrice de ce système peut être complétée en utilisant un circuit de transfert (3) dont tout ou partie des conduits ou tuyaux sont chauffants. Typiquement les conduits ou tuyaux chauffants, dans le procédé ou l'installation selon l'invention, se trouvent à une température de l'ordre de 30°C (i.e. 30°C $\pm$ 4°C). Dans un mode de réalisation particulier, le circuit de transfert (3) présente un réchauffeur de gaz (7) placé en aval de la vanne ou du robinet (12) et en amont

# EP 3 174 071 B1

de l'organe de détente (6) et les tuyaux ou conduits du circuit de transfert en aval de l'organe de détente (6) sont chauffants pour compenser le refroidissement du mélange gazeux suite à sa détente. Dans un autre mode de réalisation particulier, le circuit de transfert (3) présente un réchauffeur de gaz (7) placé en aval de la vanne ou du robinet (12) et en amont de l'organe de détente (6) et l'ensemble des tuyaux ou conduits formant le circuit de transfert (3) sont chauffants.

Lorsque le robinet ou la vanne (11) du type électrovanne est ouverte, le mélange gazeux comprenant du $CO_2$ et du i-$C_3F_7CN$ remplit alors l'enveloppe (1). Lors de cette étape de remplissage, l'air initialement présent dans l'enveloppe (1) est chassé par ce mélange gazeux. En variante, préalablement à l'étape de remplissage, le vide (0-0,1 kPa) est fait dans le volume intérieur de l'enveloppe (1). Le système objet de la présente invention est également utilisable pour faire des compléments de gaz dans l'enveloppe (1) sur site.

Les Figures 1 à 4 illustrent quatre installations selon l'invention, suivant les principes suivants :

- chauffe du récipient (2) du type container ou bouteille, contenant le mélange de $CO_2$ et d'i-$C_3F_7CN$ à l'état liquéfié pressurisé jusqu'à atteindre la température critique du mélange par organe externe (4) de chauffe du type ceinture chauffante externe (Figures 1 et 2) ou organe interne (5) de chauffe du type résistance chauffante interne combiné à un système d'isolation thermique (10) du type caisson isolant entourant le récipient (2) (Figures 3 et 4) ;
- une fois le mélange de $CO_2$ et d'i-$C_3F_7CN$ sous forme gazeuse avec le mélange dans un état supercritique, ouverture de la vanne ou du robinet (12) isolant le récipient (2) du circuit de transfert (3) moyennant quoi le mélange gazeux est introduit dans le circuit de transfert (3) ;
- passage du mélange gazeux par un réchauffeur de gaz (7) du type réchauffeur $CO_2$ pour compenser le refroidissement du mélange gazeux ;
- passage du mélange gazeux par un détendeur (6) ;
- transfert du mélange gazeux dans le circuit de transfert (3) par des tuyaux chauffants afin de compenser le refroidissement du gaz par détente Joule Thomson ;
- le circuit de transfert (3) contient une électrovanne (11) contrôlée par la mesure de la température critique du mélange gazeux au niveau du récipient (2) (pour les Figures 1 et 3) ou par la mesure directe du ratio entre l'i-$C_3F_7CN$ et le $CO_2$ (pour les Figures 2 et 4). L'électrovanne (11) est ouverte et autorise le remplissage de l'enveloppe de l'équipement (1) uniquement lorsque la température du mélange est au moins égale à la température critique du mélange, ou le ratio est égal à la valeur cible,
- la puissance de chauffe est pilotée par la mesure de la température du mélange gazeux dans le récipient (2) au niveau des moyens de mesure (9) (pour les Figures 1 et 3) ou par la mesure directe du ratio entre l'i-$C_3F_7CN$ et le $CO_2$ au niveau des moyens de mesure (8) (pour les Figures 2 et 4).

Les installations des Figures 1 à 4 contiennent des sécurités en température afin de ne jamais atteindre 65°C au niveau du mélange gazeux.

De même, les installations des Figures 1 à 4 contiennent un disque de rupture taré à 120 bars afin d'éviter une surpression au niveau du récipient (2) de type bouteille ou container en cas de défaillance du système de régulation de la chauffe.

Dans l'installation de la Figure 1, le système de chauffage (4) est extérieur au récipient (2) (container ou bouteille). La régulation de la puissance de chauffe est conditionnée par la mesure de la température du mélange gazeux dans le récipient (2) au niveau des moyens de mesure (9).

L'installation de la Figure 2 est une variante de l'installation de la Figure 1 dans laquelle la régulation de la puissance de chauffe est conditionnée par la mesure directe du ratio entre l'i-$C_3F_7CN$ et le $CO_2$ au niveau des moyens de mesure (8).

Dans l'installation de la Figure 3, le système de chauffage (5) est interne au récipient (2) (container ou bouteille) qui est combiné à un système d'isolation thermique (10) du type caisson isolant entourant le récipient (2). La régulation de la puissance de chauffe est conditionnée par la mesure de la température du mélange gazeux dans le récipient (2) au niveau des moyens de mesure (9).

L'installation de la Figure 4 est une variante de l'installation de la Figure 3 dans laquelle la régulation de la puissance de chauffe est conditionnée par la mesure directe du ratio entre l'i-$C_3F_7CN$ et le $CO_2$ au niveau des moyens de mesure (8).

## Revendications

**1.** Procédé de remplissage d'une enveloppe (1) fermée d'un appareillage électrique pour une ligne de transport de courant à haute ou moyenne tension, dans laquelle se trouve au moins un composant électrique, avec un mélange gazeux comprenant de l'heptafluoroisobutyronitrile et du dioxyde de carbone dans des proportions prédéfinies, ledit procédé comprenant les étapes consistant à :

a) préparer, dans un récipient (2), un mélange sous forme liquide pressurisé comprenant de l'heptafluoroisobutyronitrile et du dioxyde de carbone dans des proportions prédéfinies ;

b) chauffer, dans le récipient (2), le mélange liquide pressurisé préparé à ladite étape (a) jusqu'à une température supérieure ou égale à la température critique du mélange moyennant quoi un mélange gazeux comprenant de l'heptafluoroisobutyronitrile et du dioxyde de carbone dans des proportions prédéfinies est obtenu ;

c) transférer ledit mélange gazeux obtenu à l'étape (b) du récipient (2) vers l'enveloppe (1) via un circuit de transfert (3) dans lequel le mélange gazeux est détendu et maintenu à une température supérieure à la température de liquéfaction de l'heptafluoroisobutyronitrile à sa pression partielle dans le circuit de transfert (3) avant son entrée dans l'enveloppe (1) à remplir.

2. Procédé selon la revendication 1, **caractérisé en ce que** le chauffage durant ladite étape (b) est réalisé par un organe de chauffe (4) externe au récipient (2).

3. Procédé selon la revendication 1, **caractérisé en ce que** le chauffage durant ladite étape (b) est réalisé par un organe de chauffe (5) interne au récipient (2).

4. Procédé selon l'une quelconque des revendications 1 à 3, **caractérisé en ce que**, durant ladite étape de transfert (c), le ratio molaire entre l'heptafluorobutyronitrile et le dioxyde de carbone dans le mélange gazeux est mesuré.

5. Procédé selon l'une quelconque des revendications 1 à 4, **caractérisé en ce que**, durant ladite étape de transfert (c), la température du mélange gazeux dans le récipient (2) est mesurée.

6. Procédé selon l'une quelconque des revendications 4 ou 5, **caractérisé en ce que** la puissance de chauffage lors de ladite étape (a) est ajustée et/ou régulée sur la base

- de la mesure du ratio molaire entre l'heptafluorobutyronitrile et le dioxyde de carbone telle que définie à la revendication 4
- de la mesure de la température du mélange gazeux telle que définie à la revendication 5 et/ou
- de la mesure de la température au niveau de l'organe de chauffe (4,5).

7. Procédé selon l'une quelconque des revendications 1 à 6, **caractérisé en ce que** le mélange gazeux comprenant de l'heptafluorobutyronitrile et du dioxyde de carbone comprend en outre de l'oxygène.

8. Installation pour le remplissage d'une enveloppe (1) fermée d'un appareillage électrique pour une ligne de transport de courant à haute ou moyenne tension, dans laquelle se trouve au moins un composant électrique, avec un mélange gazeux comprenant de l'heptafluoroisobutyronitrile et du dioxyde de carbone dans des proportions prédéfinies, ladite installation comprenant :

- un récipient (2) apte à contenir un mélange comprenant de l'heptafluoroisobutyronitrile et du dioxyde de carbone dans des proportions prédéfinies ;
- un organe de chauffe (4,5) pour chauffer, dans le récipient (2), le mélange comprenant de l'heptafluoroisobutyronitrile et du dioxyde de carbone dans des proportions prédéfinies se présentant sous forme liquide pressurisée jusqu'à une température supérieure ou égale à la température critique du mélange moyennant quoi un mélange gazeux comprenant de l'heptafluoroisobutyronitrile et du dioxyde de carbone dans des proportions prédéfinies est obtenu ;
- un circuit de transfert (3) pour transférer le mélange gazeux comprenant de l'heptafluoroisobutyronitrile et du dioxyde de carbone dans des proportions prédéfinies du récipient (2) vers l'enveloppe (1), ledit circuit de transfert reliant fluidiquement ledit récipient (2) et ladite enveloppe (1) et ledit circuit de transfert présentant un organe de détente (6) pour abaisser la pression du mélange gazeux à une valeur déterminée en vue du remplissage de l'enveloppe (1) et un système (7) apte à maintenir le mélange gazeux à une température supérieure à la température de liquéfaction de l'heptafluorobutyronitrile à sa pression partielle dans le circuit de transfert (3),

ladite installation de remplissage comprenant une ou plusieurs sécurité(s) de température.

9. Installation de remplissage selon la revendication 8, **caractérisée en ce que** le circuit de transfert (3) présente des moyens (8) pour mesurer le ratio molaire entre l'heptafluorobutyronitrile et le dioxyde de carbone dans le mélange gazeux.

**10.** Installation de remplissage selon la revendication 8 ou 9, **caractérisée en ce que** le circuit de transfert (3) présente un capteur de température (9) pour mesurer la température du mélange gazeux dans le récipient (2).

**Patentansprüche**

**1.** Verfahren zum Befüllen eines geschlossenen Gehäuses (1) von einer elektrischen Apparatur für eine Hoch- oder Mittelspannungsstromübertragungsleitung, in der sich mindestens eine elektrische Komponente befindet, mit einem gasförmigen Gemisch, das Heptafluorisobutyronitril und Kohlendioxid in vordefinierten Anteilen umfasst, wobei das Verfahren die folgenden Schritte umfasst:

a) Herstellen eines Gemisches in einer unter Druck stehenden flüssigen Form, das Heptafluorisobutyronitril und Kohlendioxid in vordefinierten Anteilen umfasst, in einem Behälter (2);
b) Erhitzen des in Schritt (a) hergestellten unter Druck stehenden flüssigen Gemisches in dem Behälter (2) auf eine Temperatur, die größer oder gleich der kritischen Temperatur des Gemisches ist, wodurch ein gasförmiges Gemisch erhalten wird, das Heptafluorisobutyronitril und Kohlendioxid in vordefinierten Anteilen umfasst;
c) Übertragen des in Schritt (b) erhaltenen gasförmigen Gemisches von dem Behälter (2) zu der Gehäuse (1) über eine Übertragungsleitung (3), in der das gasförmige Gemisch expandiert und auf einer Temperatur oberhalb der Verflüssigungstemperatur des Heptafluorisobutyronitrils bei seinem Partialdruck in der Übertragungsleitung (3) vor seinem Eintritt in das zu füllende Gehäuse (1) gehalten wird.

**2.** Verfahren nach Anspruch 1, **dadurch gekennzeichnet, dass** das Erhitzen während des Schritts (b) durch ein Heizelement (4) außerhalb des Behälters (2) durchgeführt wird.

**3.** Verfahren nach Anspruch 1, **dadurch gekennzeichnet, dass** das Erhitzen während des Schrittes (b) durch ein Heizelement (5) innerhalb des Behälters (2) durchgeführt wird.

**4.** Verfahren nach einem der Ansprüche 1 bis 3, **dadurch gekennzeichnet, dass** während des Übertragungsschritts (c) das Molverhältnis zwischen dem Heptafluorbutyronitril und dem Kohlendioxid in dem Gasgemisch gemessen wird.

**5.** Verfahren nach einem der Ansprüche 1 bis 4, **dadurch gekennzeichnet, dass** während des Übertragungsschrittes (c) die Temperatur des gasförmigen Gemisches in dem Behälter (2) gemessen wird.

**6.** Verfahren nach einem der Ansprüche 4 oder 5, **dadurch gekennzeichnet, dass** die Heizleistung während des Schritts (a) eingestellt und / oder geregelt wird auf der Basis

- von der Messung des Molverhältnisses zwischen dem Heptafluorbutyronitril und dem Kohlendioxid wie in dem Anspruch 4 definiert
- von der Messung der Temperatur des gasförmigen Gemisches wie in Anspruch 5 definiert und / oder
- von der Messung der Temperatur bei dem Heizelement (4, 5).

**7.** Verfahren nach einem der Ansprüche 1 bis 6, **dadurch gekennzeichnet, dass** das Heptafluorbutyronitril und Kohlendioxid umfassende Gasgemisch ferner Sauerstoff umfasst.

**8.** Anlage zum Befüllen eines geschlossenen Gehäuses (1) von einer elektrischen Apparatur für eine Hoch- oder Mittelspannungsstromübertragungsleitung, in der sich mindestens eine elektrische Komponente befindet, mit einem gasförmigen Gemisch, das Heptafluorisobutyronitril und Kohlendioxid in vordefinierten Anteilen umfasst, wobei die Anlage umfasst:

- einen Behälter (2), der geeignet ist, ein Gemisch zu enthalten, das Heptafluorisobutyronitril und Kohlendioxid in vordefinierten Anteilen enthält;
- ein Heizelement (4,5) zum Erhitzen des Gemisches, das Heptafluorisobutyronitril und Kohlendioxid in vorbestimmten Anteilen in Form einer unter Druck stehenden Flüssigkeit umfasst, in dem Behälter (2) bis zu einer Temperatur größer oder gleich der kritischen Temperatur des Gemisches, wodurch ein gasförmiges Gemisch erhalten wird, das Heptafluorisobutyronitril und Kohlendioxid in vorbestimmten Anteilen umfasst;
- eine Übertragungsleitung (3) zum Übertragen des Heptafluorisobutyronitril und Kohlendioxid umfassenden Gasgemisches in vordefinierten Anteilen von dem Behälter (2) zu dem Gehäuse (1), wobei die Übertragungsleitung ein Entspannungselement (6) zum Absenken des Druckes des gasförmigen Gemisches auf einen vorbestimmten Wert hinsichtlich des Füllens des Gehäuses (1) und ein System (7) aufweist, das geeignet ist, um das gasförmige Gemisch auf einer Temperatur oberhalb der Verflüssigungstemperatur des Heptafluorbutyronitrils bei seinem Partialdruck in der Übertragungsleitung (3) zu halten,

wobei die Anlage zum Befüllen eine oder mehrere Temperatursicherungen umfasst.

**9.** Anlage zum Befüllen nach Anspruch 8, **dadurch gekennzeichnet, dass** die Übertragungsleitung (3) Mittel (8) zur Messung des Molverhältnisses zwischen dem Heptafluorbutyronitril und dem Kohlendioxid in dem Gasgemisch aufweist.

**10.** Anlage zum Befüllen nach Anspruch 8 oder 9, **dadurch gekennzeichnet, dass** die Übertragungsleitung (3) einen Temperatursensor (9) zur Messung der Temperatur des Gasgemisches in dem Behälter (2) aufweist.

**Claims**

**1.** Method for filling a closed electrical switchgear enclosure (1) for a high or medium voltage power transmission line, in which there is at least one electrical component, with a gas mixture comprising heptafluoroisobutyronitrile and carbon dioxide in predefined proportions, said method including steps consisting of;

a) preparing, in a receptacle (2), a mixture in pressurised liquid form comprising heptafluoroisobutyronitrile and carbon dioxide in predefined proportions;
b) heating, in a receptacle (2), the pressurised liquid mixture prepared in said step (a) up to a temperature higher than or equal to the critical temperature of the mixture as a result of which a gaseous mixture comprising heptafluoroisobutyronitrile and carbon dioxide in predefined proportions is obtained;
c) transfer said gaseous mixture obtained in step b) from the receptacle (2) to the enclosure (1) through a transfer circuit (3) in which the gaseous mixture is expanded and kept at a temperature of more than the liquefaction temperature of heptafluoroisobutyronitrile at its partial pressure in the transfer circuit (3) before entering the enclosure (1) to be filled.

**2.** Method according to claim 1, **characterised in that** heating during said step (b) is made by a heating device (4) external to the receptacle (2).

**3.** Method according to claim 1, **characterised in that** heating during said step (b) is made by a heating device (5) internal to the receptacle (2)

**4.** Method according to any one of claims 1 to 3, **characterised in that** during said transfer step (c), the molar ratio between heptafluoroisobutyronitrile and carbon dioxide in the mixture is measured.

**5.** Method according to any one of claims 1 to 4, **characterised in that** during said transfer step (c), the temperature of the gaseous mixture in the receptacle (2) is measured.

**6.** Method according to either claim 4 or 5, **characterised in that** the heating power during said transfer step (a) is adjusted and/or regulated based on

- the measurement of the molar ratio between heptafluoroisobutyronitrile and carbon dioxide as defined in claim 4
- the measurement of the temperature of the gaseous mixture as defined in claim 5 and/or
- the measurement of the temperature at the heating element (4, 5).

**7.** Method according to any one of claims 1 to 6, **characterised in that** the gaseous mixture comprising heptafluoroisobutyronitrile and carbon dioxide also includes oxygen.

**8.** Installation for filling a closed electrical switchgear enclosure (1) for a high or medium voltage power transmission line, in which there is at least one electrical component, with a gas mix comprising heptafluoroisobutyronitrile and carbon dioxide in predefined proportions, said installation comprising;

- a receptacle (2) designed to contain a mixture comprising heptafluoroisobutyronitrile and carbon dioxide in predefined proportions;

- a heating device (4, 5) to heat the mixture in receptacle (2) comprising heptafluoroisobutyronitrile and carbon dioxide in predefined proportions, in the form of a pressurised liquid up to a temperature higher than or equal to the critical temperature of the mixture as a result of which a gaseous mixture comprising heptafluoroisobutyronitrile and carbon dioxide in predefined proportions is obtained;

- a transfer circuit (3) to transfer the gaseous mixture comprising heptafluoroisobutyronitrile and carbon dioxide in predefined proportions from the receptacle (2) to the enclosure (1), said transfer circuit making a fluid connection between said receptacle (2) and said enclosure (1) and said transfer circuit having an expansion device (6) to lower the pressure of the gas mixture to a determined value to fill the enclosure (1) and a system (7) capable of keeping the temperature of the gas mixture higher than the liquefaction temperature of heptafluoroisobutyronitrile at its partial pressure in the transfer circuit (3),

- said filling installation comprising one or several temperature safety devices.

9. Filling installation according to claim 8, **characterised in that** the transfer circuit (3) comprises means (8) for measuring the molar ratio between heptafluoroisobutyronitrile and carbon dioxide in the gaseous mixture.

10. Filling installation according to claim 8 or 9, **characterised in that** the transfer circuit (3) comprises a temperature sensor (9) for measuring the temperature of the gaseous mixture in the receptacle (2).

FIG.1

FIG.2

FIG.3

Tuyau chauffant

FIG.4

Tuyau chauffant

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2014037566 A
- WO 2015040069 A
- WO 2014037031 A

**Littérature non-brevet citée dans la description**

- **K.G. JOBACK ; R.C. REID.** *Chem. Eng. Comm.,* 1987, vol. 57, 233-243
- *CHEMICAL ABSTRACTS,* 42532-60-5